# EUROPEAN PATENT SPECIFICATION

(11) **EP 2 483 554 B1**
(45) Date of publication and mention of the grant of the patent: **12.02.2014**
(21) Application number: 10773405.5
(22) Date of filing: 21.09.2010
(51) Int. Cl.: F03D 3/06

(54) **TAPERED HOLLOW HELICAL TURBINE FOR ENERGY TRANSDUCTION**
KEGELFÖRMIGE HOHLE SPIRALTURBINE ZUR ENERGIETRANSDUKTION
TURBINE HÉLICOÏDALE CREUSE CONIQUE POUR TRANSDUCTION D'ÉNERGIE

(30) Priority: 29.09.2009 IL 20122209
(43) Date of publication of application: 08.08.2012
(73) Proprietor: Re-10 Ltd, 99745 (IL)
(72) Inventor: RAZ, Carmi, 99745 Gizo (IL); EYAL, Aharon, 93629 Jerusalem (IL)
(74) Representative: Fairbairn, Angus Chisholm
(86) International application number: PCT/IL2010/000785
(87) International publication number: WO 2011/039750

(56) References cited:
- US-A- 2 544 154
- US-A- 5 167 483
- US-A1- 2008 191 487

## Description

### FIELD OF THE INVENTION

The present invention, in some embodiments thereof, relates to a propeller-less turbine, and more particularly, but not exclusively, to a device for converting linear flow into rotary motion, with the potential for electricity production.

### BACKGROUND OF THE INVENTION

Two of the greatest challenges facing mankind are interrelated. Traditional carbon-based energy sources such as oil and coal are running out. Additionally, ecological threats based on human use of such energy sources are considered to be potentially devastating to life on Earth. As such a major goal of most nation states is to find energy sources that provide for human needs while not contributing significantly to atmospheric carbon dioxide or other "greenhouse gases".

The two most compelling sources for renewable energy are solar and wind. Both provide on a daily basis well in excess of the requirements for human activity. That said, the ability to economically and technically harness solar and wind energy is not trivial. While much effort has been directed towards developing solar and wind electrical capacity, to date, both methods for making electricity remain marginal in their contribution to most electrical grids.

Wind farms have sprung up all over the world, with many based in open plains or in high-wind ocean regions. Gigawatt energy projects are being developed. Most turbines include propellers - generally three in number - that can rotate in response to prevalent winds. The rotating propellers drive a gear box and electrical generator for production of electricity.

US Patent Number 4,297,076 to Donham, et al*.* describes an improved wind turbine in which the tip portions of the blades are variable in pitch and are cyclically varied in pitch to control the yaw of the rotor and to relieve bending moments on the blades and are collectively varied in pitch to relieve bending moments on the blades and to maximize the power output of the turbine at a selected constant rotor speed.

US Patent Number 4,362,470 to Locastro et al*.* describes a wind turbine having a shaft rotatable about an axis, and a plurality of blades mounted on the shaft and arranged to be rotated by wind and thereby rotate the shaft.

US Patent Number 5,256,034 to Sultzbaugh describes a variable pitch propeller mechanism including a plurality of airfoil-shaped blades on three spaced apart blade arms.

US 20080145230 to Harman, et al*.* describes a surface profile for axial flow fans and rotors used in environments requiring high output in conjunction with constrained fan size.

WO 2009/051793 describes a structure subjected to stress comprising a member upon which the stress is imposed wherein the stress within the member is distributed and wherein the configuration of at least a substantial portion of the member has curvature which conforms to a logarithmic curve to cause the stress to be distributed substantially evenly.

US Patent Number 5,642,984 to Gorlov describes a helical turbine assembly capable of providing high speed unidirectional rotation under a multidirectional ultra low-head fluid flow. The assembly comprises an array of helical turbine units or modules arranged, vertically or horizontally, to harness, for example, water or wind power. Each turbine unit or module comprises a plurality of helical blades having an airfoil profile. The modules for wind power may be mounted to rotatable shafts supported by lightweight structures anchored by guy wires to the ground. The helical turbine can also provide ship propulsion by utilizing the power of ocean waves.

US Patent Number 7,132,760 to Becker describes a hybrid blade wind turbine device formed of at least a pair of straight outer airfoil blades, and a pair of inner helical wing blades, as supported for rotation within a safety protective cage structure, which wind turbine can be mounted in the vertical, horizontal, or other aligned operational positions.

US Patent Number 4,708,592 to Krolick et al*.* describes a collapsible structure comprising a non-rigid helicoidal sheet braced by light-weight members according to one of several methods.

US 20090160194 to Clark describes a blade for use in a wind turbine, with the blade having a longitudinal axis for extending radially outwardly from a center of rotation of the blade on the wind turbine. The blade has a front side with a front surface for orienting in a windward direction and a rear side with a rear surface for orienting in a leeward direction.

US Patent Number 5,425,619 to Aylor describes a fluid energy turbine has a radial flow rotor in which fluid driven blades are peripherally distributed about a horizontal axis and in which auxiliary biased outlet gates are provided for release of high fluid pressures to govern turbine speed such as in high storm winds.

US Patent Number 4,082,479 to Rangi et al describes an overspeed spoiler for vertical axis wind turbines of the type having straight or curved airfoil blades attached to a vertical shaft formed by a relatively thin flat blade shaped spoiler element hinge mounted on the trailing edge, leading edge, or at a central position of a portion of the airfoil section.

US Patent Number 5,632,599 to Townsend teaches an wind energy turbine having air driven blades peripherally distributed about a horizontal rotational axis forming an interior region in which air pressures built up by wind introduced thereto are released through the spaces between the blades.

US Patent Number 4,500,257 to Sullivan describes an aerodynamic spoiler system for a vertical axis wind turbine includes spoilers on the blades initially stored near the rotor axis to minimize drag.

US Patent Number 4,715,782 to Shimmel describes an hydraulic speed control device for limiting the speed of a wind turbine rotor by controlling the deployment of rotor braking devices includes four fluidicly interconnected elements: one or more fluid cylinders, a relief valve, an accumulator, and a check valve.

US Patent Number 5,531,567 to Hulls teaches Darrieus-type vertical axis wind turbine with tensioned blades, along with various mechanisms for tensioning the blades.

US Patent Number 5,167,483 discloses an energy conversion device with decreasing cross-sectional area.

### SUMMARY OF THE INVENTION

It is therefore an object of the instant invention to describe methods and devices for improved efficiency in converting linear flow energy into rotary energy. Specifically, the invention includes structures and methods that allow for a more efficient turbine, one that lacks propellers and rather directs flow through the body of tapered hollow turbine to realize high energy conversion efficiencies.

According to the invention there is provided fluid converting element for converting a flow of fluid into rotation, the fluid converting element comprising at least two open tubular conduits wrapped around a rotation axis, wherein at least one of said tubular conduits is helically wound around said rotation axis and each of said conduits comprises a chamber having a respective inlet port and a respective outlet port.

The cross-sectional area of the inlet port of at least one of said tubular conduits is larger than the cross-sectional area of the outlet port of the conduit.

The rotation speed of the fluid converting element around the rotation axis is adjustable. This may be done by disturbing fluid flow or by opening a cavity in the chamber of the fluid converting element or by modifying the area of at least one of the inlet or outlet ports or by changing the helix angle of the helically wound tubular conduit.

In some embodiments, the diameter of at least one of the tubular conduits varies along its length.

In some embodiments, the fluid is of at least one of wind and water.

In some embodiments, a machine includes the fluid converting element, and further comprises an energy transducer that is responsive to the rotation of the fluid converting element.

In an aspect of the machine, the energy transducer is selected from the group consisting of generators, compressors, pumps, seizers, lifts, drills, stirrers, and kneaders.

In some embodiments, at least one of the tubular conduits is made from a material selected from the group consisting of a metal, fibers, wood, polymeric material, glass, fabric, alloys and combinations thereof.

In accordance with another aspect of the invention, there is provided a method for converting energy associated with fluid flow into electricity, comprising: providing a fluid converting element comprising at least two open tubular conduits wrapped around a rotation axis, wherein at least one of the tubular conduits is helically wound around the axis and each of the conduits comprises a respective inlet port and a respective outlet port; exposing the fluid converting element to a fluid flow, whereupon rotation of the fluid converting element is induced; converting the rotation into electricity; and adjusting a rotation speed of the fluid converting element.

In one aspect of the method, the fluid is of at least one of wind and water.

Unless otherwise defined, all technical and/or scientific terms used herein may have the same meaning as commonly understood by one of ordinary skill in the art to which the invention pertains. Although methods and materials similar or equivalent to those described herein can be used in the practice or testing of embodiments of the invention, exemplary methods and/or materials are described below. In case of conflict, the patent specification, including definitions, will control. In addition, the materials, methods, and examples are illustrative only and are not intended to be necessarily limiting.

### BRIEF DESCRIPTION OF THE DRAWINGS

Some embodiments of the invention are herein described, by way of example only, with reference to the accompanying drawings. With specific reference now to the drawings in detail, it is stressed that the particulars shown are by way of example and for purposes of illustrative discussion of embodiments of the invention. In this regard, the description taken with the drawings makes apparent to those skilled in the art how embodiments of the invention may be practiced. In the various embodiments disclosed herein, like elements have like reference numerals differing by multiples of 100.

In the drawings:
**FIGS. 1A to 1C** are schematic views of a single "fluid converting element" of three hoses, emphasizing the unique aspects of the invention;
**FIGS. 2A and 2B** are schematic views of a single fluid converting element of three hoses, with an emphasis on the internal aspects of the hoses;
**FIG. 3** is a schematic view of a fluid converting element of two hoses, the smallest version of the present invention;
**FIG. 4** is a schematic side view of the fluid converting element of FIG 3;
**FIG. 5** is a schematic view of a fluid converting element of three hoses in a possible configuration for use in the present invention;
**FIG. 6** is a schematic view of a fluid converting element used as a wind turbine, with illustration of a generator;
**FIG. 7** is a schematic view of a fluid converting element used for a water turbine, with illustration of a generator;
**FIG. 8** is a schematic view of a wind farm based on multiple fluid converting element-based wind turbines; and
**FIG. 9** is a flowchart of a method associated with the present invention.

### DETAILED DESCRIPTION

In the following description, numerous specific details are set forth in order to provide a thorough understanding of the present invention. It will be apparent, however, to one skilled in the art that the present invention may be practiced without these specific details. In other instances, well-known circuits and control logic have not been shown in detail in order not to unnecessarily obscure the present invention.

The present invention, in some embodiments thereof, relates to a propeller-less turbine and, more particularly, but not exclusively, to a helical system for efficiently converting wind or water power to electricity.

Certain terms are now defined in order to facilitate better understanding of the present invention.

"Turbine", "stator", "rotor", "generator", "wind", "linear force" and "wave" or "water wave" may have their generally used meaning as understood in the fields of electrical generation and motors.

The terms "fluid converting element", "open tubular conduit" and "hose" have definitions that are specific to the instant invention. Fluid converting element or device generally refers to a plurality of solid hoses or open tubular conduits that are associated with one another around an axis, wherein at least one open tubular conduit is in a helical structure with a tapered diameter along its length. Hose or open tubular conduit may refer to a single hollow helical element, in which the helix has a non-constant diameter along its length, its inlet port being substantially larger than its outlet port, and wherein its outlet port faces in a direction different than that of its inlet port. An open tubular conduit is a rigid structure, may be of any relevant dimensions - based on specific application - and is generally used in multiples, that is a single fluid converting element is generally composed of two or more hoses, wherein each hose is a solid structure, each having an inlet port surface area significantly larger than the surface area of the hose outlet port. Fluid converting element hoses are wrapped around each other, thus forming double-, triple-, etc. helices of hoses in a single hose. For the purpose of the present invention, a fluid converting element or open tubular conduit represents a turbine, whose entire body rotates in response to linear flow energy, generally realized from wind or water flow into the inlet and out the outlet. The bottom wall of each hose is generally constructed so that the linear force impinging on the hose, generally water or air, is directed to the bottom wall and allows for efficient transfer of linear force energy for rotation of the plurality of hoses in a single fluid converting element.

"Chamber" refers to a space between an inlet and an outlet of an open tubular conduit. A chamber is generally hollow in nature, with a single, continuous surface that surrounds all sides of the chamber, from inlet to outlet. A chamber is generally tapered along its length.

"Energy transducer" may refer to an element or device that can transfer one form of energy to another form. A non-limiting example would be a generator that can convert fluid flow motion into electrical energy.

The terms "comprises", "comprising", "includes", "including", "having" and their conjugates mean "including but not limited to".

The term "consisting of means "including and limited to".

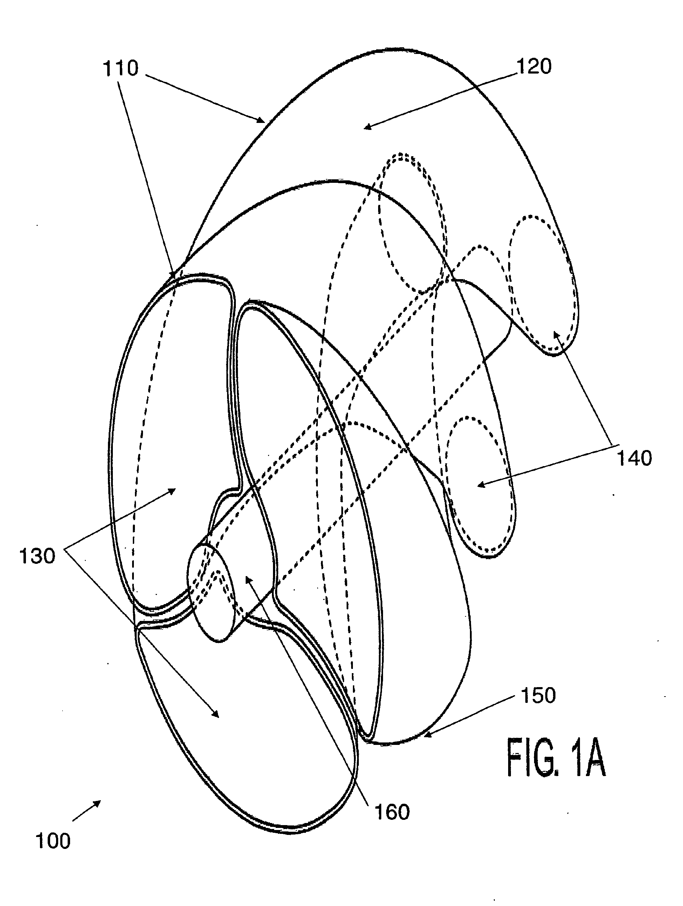

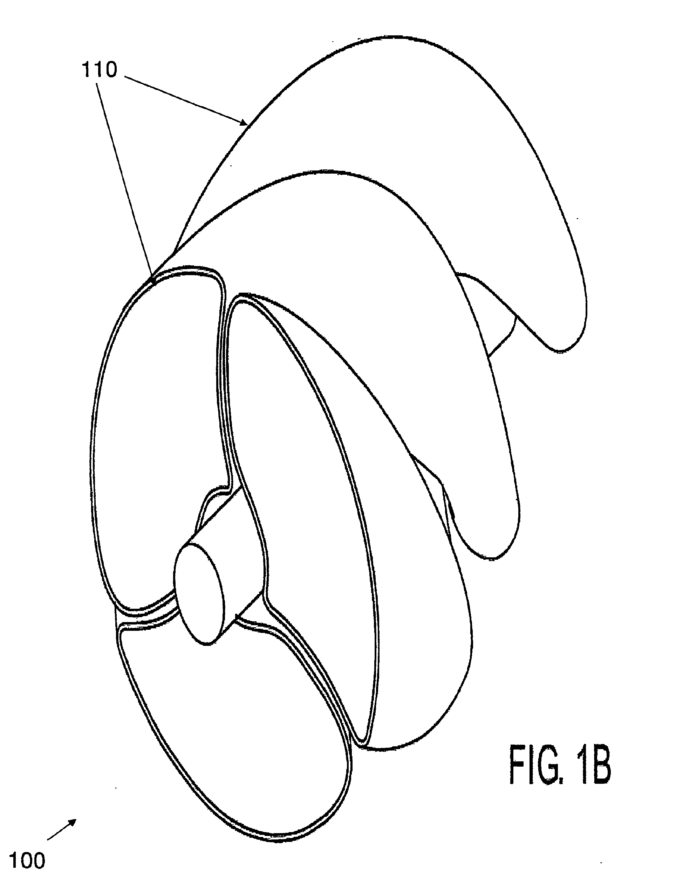

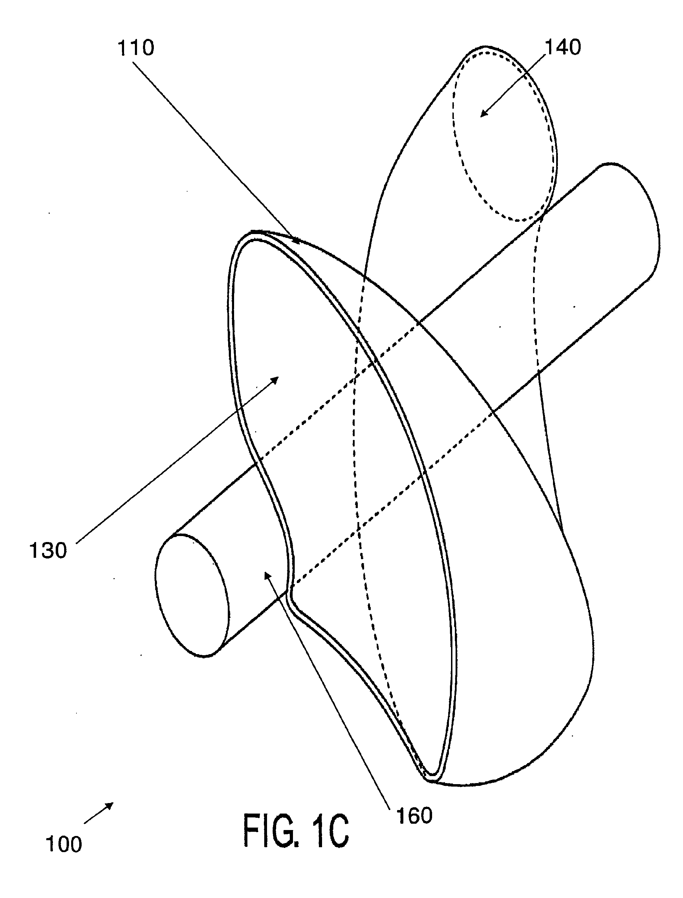

For purposes of better understanding some embodiments of the present invention, as illustrated in Figures 1-9 of the drawings, reference is first made to the construction and operation of a helical fully-body fluid converting element turbine as illustrated in FIGS. 1A - 1C. Without being bound by any particular theory, the following discussion is offered to facilitate understanding of the invention. Before explaining at least one embodiment of the invention in detail, it is to be understood that the invention is not necessarily limited in its application to the details of construction and the arrangement of the components and/or methods set forth in the following description and/or illustrated in the drawings and/or the Examples. The invention is capable of other embodiments or of being practiced or carried out in various ways.

### First Embodiment

Referring now to the drawings, FIG. 1A illustrates a fluid converting element 100 according to the present invention. The fluid converting element 100 includes three open tubular conduits 110, all helical and wrapped around each other, along a rotational axis 160. Features of the fluid converting element 100 include its length (defined from inlet 130 to outlet 140) being greater than its diameter, though other embodiments may appear otherwise. The fluid converting element 100 includes three open tubular conduits 110, each being a hollow helical element defining a chamber 120 with an inlet 130 and an outlet 140 and a bottom wall 150 that is curved relative the length of the fluid converting element 100. The inlet 130 and outlet 140 are always facing in different directions from one another as shown in FIG. 1A. The inlet 130 has a cross-sectional surface area that is significantly larger than that of the outlet 140, thus leading to a tapered helix structure over the length 105 of each open tubular conduit 110 associated with the fluid converting element 100. The fluid converting element 100 is made from mechanically strong or rigid materials including but not limited to metals, polymers, ceramics, alloys, fabrics, and composites. The specific length of the fluid converting element 100 and the size of open tubular conduit 110 inlet 130 and outlet 140 depend on the specific application and the power to be generated through linear flow through the fluid converting element 100. Fluid converting elements can be small as in centimeters in length to several meters in length for high power electricity generation from wind or water waves. While the open tubular conduits 110 shown in FIG. 1A appear equivalent in size, it is understood that the individual open tubular conduits 110 may be of different sizes and features. Open tubular conduits 110 are generally produced together during fluid converting element 100 production, though the open tubular conduits 110 could be made separately and potentially of different materials. FIG. 1B shows the same arrangement of open tubular conduits 110 as shown in FIG. 1A, but without the cutaway view. The fluid converting element 100 in FIG. 1B is a single fluid converting element of three open tubular conduits 110.

Reference is now made to Fig. 1C is a cutaway view of a turbine fluid converting element 102 in which a single open tubular conduit 110 of a three hose fluid converting element is shown in its relationship to a rotational axis 160. Inlet 130 of the open tubular conduit 110 allow for air or water entry, with the associated force rotating the open tubular conduits 110 of the turbine fluid converting element 100. Air and water move along the body of the turbine fluid converting element 102 and exit at outlet 140. Energy associated with the wind or water is transferred to the body of the turbine fluid converting element 100 and thus causes the open tubular conduit 110 to rotate around its helical axis 160. As will be described below, the rotation of the fluid converting element 100 allows for generation of electricity or mechanical power through an appropriate generator system. It is noted that the fluid converting element 100 shown in FIG. 1C is for explanation purposes only and a fluid converting element with a single open tubular conduit 110 would generally not be used in practice. Multiple hoses (FIG. 1B, 110) are arranged around each other as shown and water, air, or other linear force allows for rotation of the hoses in either a clockwise or counterclockwise direction, with the water, air, or other linear force entering through an inlet 130 and leaving through an outlet 140.

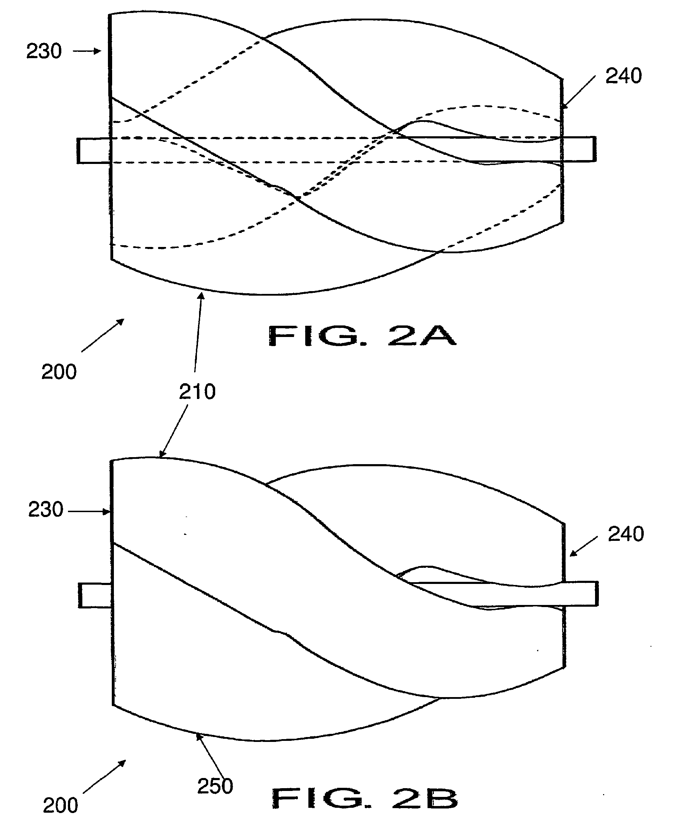

FIGS. 2A and 2B show a schematic side view of the three-hose fluid converting element 200 shown previously in FIG. 1A. The hoses 210 are wrapped around each other in a triple helical arrangement. The helices are larger at the inlet ports 230 than at the outlet ports 240. While in most applications, two or more hoses 210 used in a single turbine will be of the same general size and made of the same material, this does not have to be the case. Hoses 210 in a single fluid converting element 200 may be manufactured from different materials and may have different dimensions. It is understood that manufacture of fluid converting element 200 in combination with a turbine may include separate production of hoses 210 with subsequent joining by any means or alternatively manufacture of fluid converting element turbine with the hoses 210 produced in a joined manner. This latter method is preferred. The hoses 210 necessarily both rotate, around a common rotational axis 260 that does not move and may hold elements allowing for hoses 210 to rotate. A critical feature of the present invention, as shown in FIG. 2A is the taper along the length (from wide inlet port 230 to narrow outlet port 240) of the hoses 210, thus creating a greater force for rotation of the fluid converting element 200 turbine, as the hoses 210 become smaller throughout the length of the fluid converting element 200. The inlet port 230 and outlet port 240 face different directions, which allows-in combination with the tapered shape-pressure to be applied to a bottom wall 250 of each hose 210, which speeds the rotation of the turbine 201 over rotation of standard propeller-based turbines.

### Second Embodiment

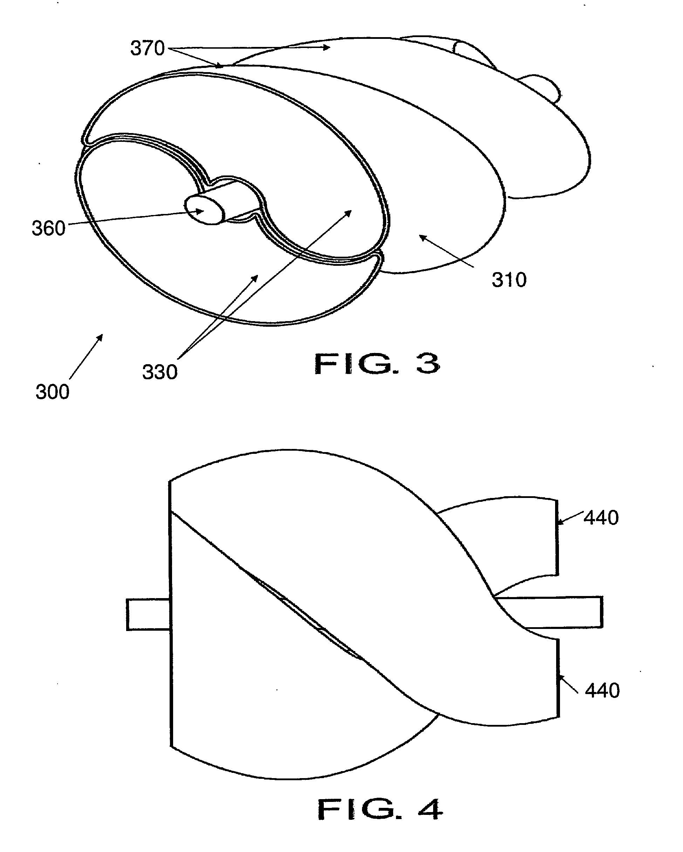

Attention is now drawn to FIG. 3 and FIG. 4 which show schematic views of an embodiment of the present invention. In this embodiment, a fluid converting element 300 having two open tubular conduits 310 has multiple helical turns 370 over the course of its rotational axis 360. Increasing the number of turns 370 allows the fluid converting element 300 to turn more rapidly. The fluid converting element 300 may have one or more turns 370, the actual number being determined by the size and application for use of the fluid converting element 300 for electricity generation or other application. This embodiment represents the smallest fluid converting element 300 according to the instant invention, namely one having two open tubular conduits 310. The open tubular conduits 310 rotate around a common axis 360 and adopt a helical shape, with inlet port 330 larger than outlet port 440 (see FIG. 4).

### Third Embodiment

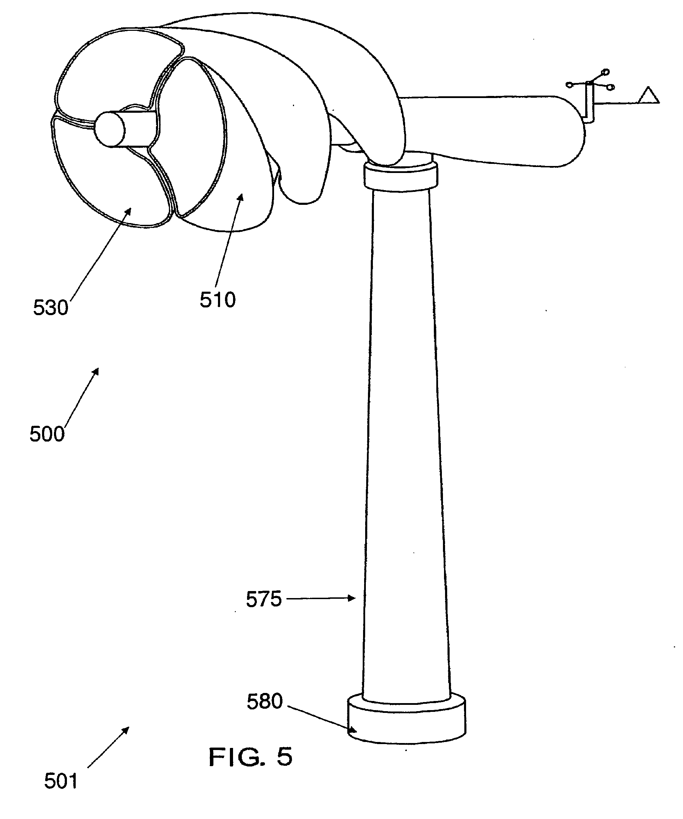

Attention is drawn to FIG. 5, which shows a wind turbine 501, which constitutes an example of a machine using the fluid converting element according to the present invention. A fluid converting element 500 having three hoses 510 is attached to a stand 575 and a base 580 which allow for planting and elevation of the fluid converting element 500 for receiving optimal external force, generally from wind (not shown). The fluid converting element 500 can rotate in either direction and can move so as to allow for optimal intake of air/wind in inlet 530. Air passing through inlet 530 continues through the hollow chamber (not visible) of the hose 510, so as to allow for efficient transfer of wind energy to cause rotation of the fluid converting element 500 prior to air egress through the outlet (not visible).

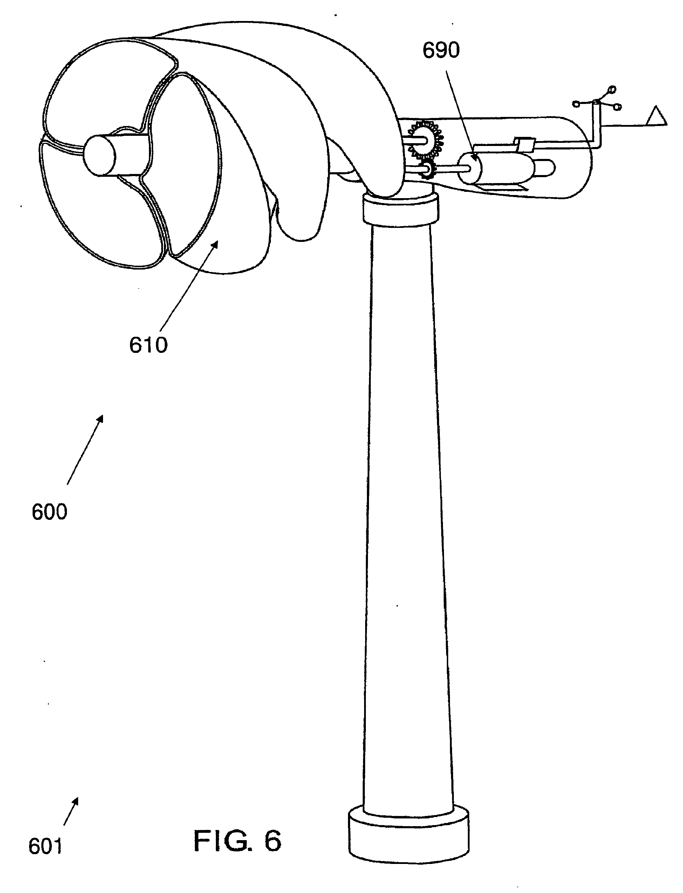

FIG. 6 shows some of the internal workings of the wind turbine 501 represented in FIG. 5 and for consistency with other drawings re-numbered 601. An electrical generator 690 and its associated components (such as Gearbox, shafts, etc.) is associated with the wind turbine 601 for production of AC electrical current as a function of wind flow through hoses 610 associated with the fluid converting element 600.

### Fourth Embodiment

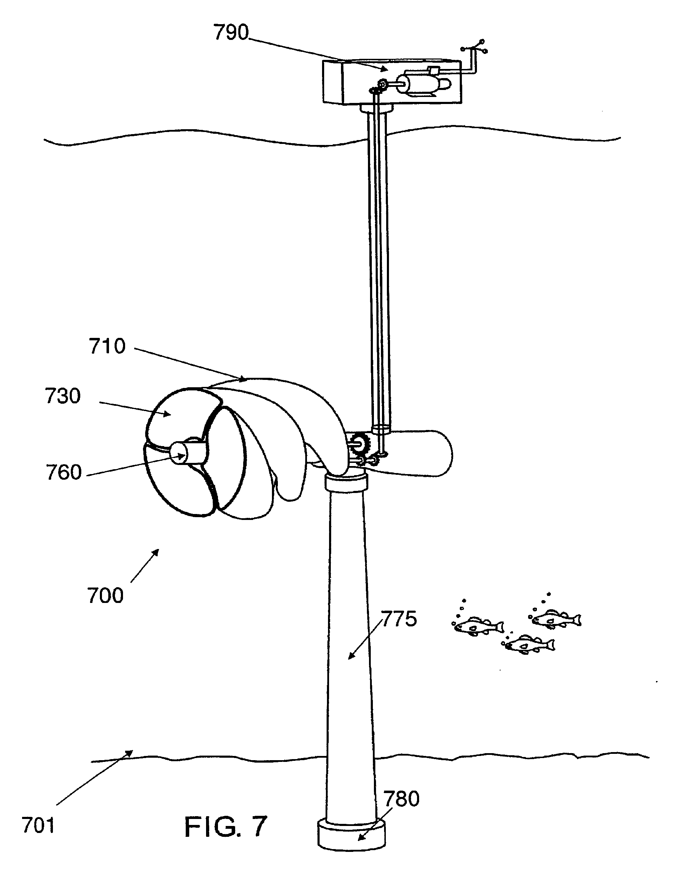

Attention is drawn to FIG. 7 which shows a schematic view of a water turbine 701, which constitutes another example of a machine with a fluid conversion element fluid converting element 700 having three open tubular conduits 710 used for generation of electricity from flowing water. There are regions in the world, the Gulf of Mexico for example, where strong and well-described currents flow during much of the year. The fluid converting element 700 with a stand 775 and base 780 is positioned so as to allow for flow of water through the inlets 730 of the open tubular conduits 710 arranged in a helical manner around a rotational axis 760. The water exits through outlets (not shown in this view) after delivering a significant portion of its flow-related energy to the fluid converting element 700 for production of electricity through the generator 790 associated with the fluid converting element 700.

### Fifth Embodiment

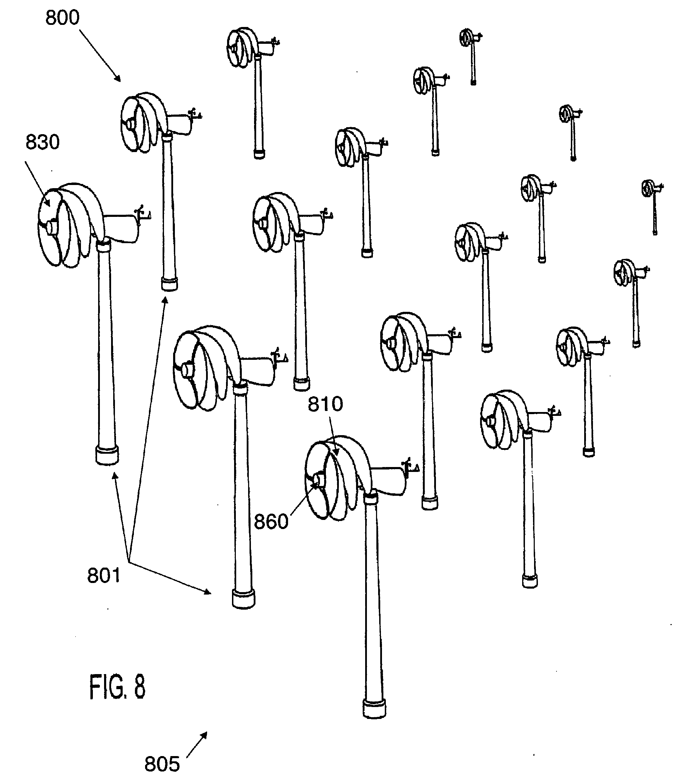

Attention is drawn to FIG. 8 which shows a schematic embodiment of a wind farm 805, which constitutes another example of a machine for the production of alternating current electricity through a multiplicity of turbines based on the rotating element as described in the present invention. The wind farm 805 contains a plurality of wind turbines 801, each turbine including a fluid converting element 800, which includes a plurality of hoses 810, having helical features as previously described. Each turbine 801 responds to flowing wind (not shown) by rotation of the hoses 810, and electricity production by associated generator equipment (not shown). Said generator equipment may be associated with each wind turbine 801; alternatively, a generator may be associated with a plurality of fluid converting element 800 based wind turbines 801. The hoses 810 may have one or more rotations around an axis 860, and the inlet 830 of each fluid converting element 800 is larger than each associated outlet (not shown in this view), this difference being a key feature in deriving greater rotational torque from the flow of wind through each fluid converting element 800.

### Sixth Embodiment

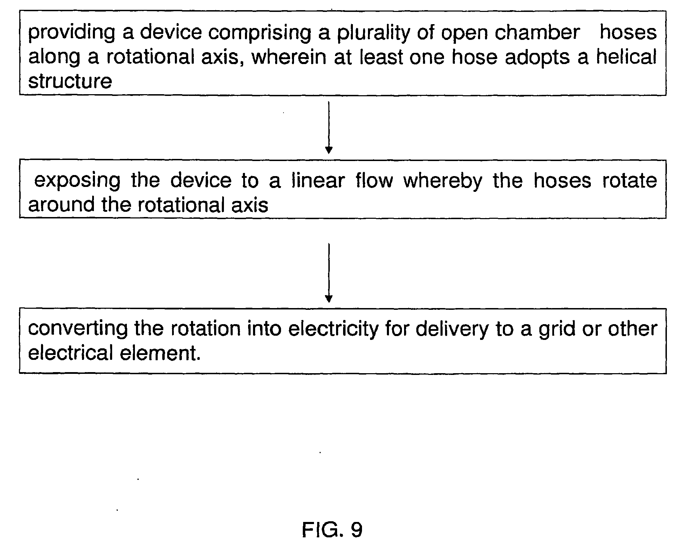

Attention is drawn to FIG. 9 which shows a flowchart for a method associated with the present invention. The method allows for the efficient conversion of energy associated with a linear flow into electricity. The first step involves providing a fluid converting element comprising a plurality of open chamber hoses along a rotational axis, wherein at least one hose adopts a helical structure. The next step involves exposing the fluid converting element to a linear flow whereby the hoses rotate around the rotational axis. Finally, one converts the rotation into electricity for delivery to a grid or other electrical element.

It is expected that during the life of a patent maturing from this application many relevant turbines will be developed and the scope of the term of the patent is intended to include all such new technologies *a priori.*

It is appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable subcombination or as suitable in any other described embodiment of the invention. Certain features described in the context of various embodiments are not to be considered essential features of those embodiments, unless the embodiment is inoperative without those elements.

Although the invention has been described in conjunction with specific embodiments thereof, it is evident that many alternatives, modifications and variations will be apparent to those skilled in the art. Accordingly, it is intended to embrace all such alternatives, modifications and variations that fall within the scope of the appended claims.

## Claims

1. A fluid converting element (100) for converting fluid flow energy into rotary energy, the fluid converting element comprising at least two open tubular conduits (110) wrapped around a rotation axis (160), wherein at least one of said tubular conduits is helically wound around said rotation axis and each of said conduits comprises a chamber (120) having a respective inlet port (130) and a respective outlet port (140);
wherein the cross-sectional area of the inlet port of at least one of said tubular conduits is larger than the cross-sectional area of the outlet port of said conduit; and
wherein the rotation speed of said fluid converting element is adjustable by at least one of:
disturbing fluid flow;
opening a cavity in said chamber;
modifying the area of at least one of said inlet or outlet ports; and
changing the helix angle of said helically wound tubular conduit.

2. A fluid converting element (100) according to claim 1 wherein the rotation speed of said fluid converting element is adjustable by disturbing fluid flow.

3. A fluid converting element (100) according to claim 1 wherein the rotation speed of said fluid converting element is adjustable by opening cavity in said chamber.

4. A fluid converting element (100) according to claim 1 wherein the rotation speed of said fluid converting element is adjustable by modifying the area of at least one of said inlet or outlet ports.

5. A fluid converting element (100) according to claim 1 wherein the rotation speed of said fluid converting element is adjustable by changing the helix angle of said helically wound tubular conduit.

6. The fluid converting element according to any one of claims 1 to 5, wherein the diameter of at least one said tubular conduits varies along its length.

7. The fluid converting element according to any one of claims 1 to 5, wherein said fluid is of at least one of wind and water.

8. A machine (601, 701) including the fluid converting element (600, 700) according to any one of claims I to 5, said machine further comprising an energy transducer (690, 790) that is responsive to the rotation of the fluid converting element.

9. The machine according to claim 8, wherein said energy transducer is selected from the group consisting of generators, compressors, pumps, seizers, lifts, drills, stirrers, and kneaders.

10. The fluid converting element according to any one of claims 1 to 5, wherein at least one of said tubular conduits is made from a material selected from the group consisting of a metal, fibers, wood, polymeric material, glass, fabric, alloys and combinations thereof.

11. A method for converting energy associated with fluid flow into electricity, comprising:
a. providing a fluid converting element (100) comprising at least two open tubular conduits (110) wrapped around a rotation axis (160), wherein at least one of said tubular conduits is helically wound around said rotation axis and each of said conduits comprises a respective inlet port (130) and a respective outlet port (140) wherein the cross-sectional area of the inlet port of at least one of said tubular conduits is larger than the cross-sectional area of the outlet port of said conduit;
b. exposing said fluid converting element to a fluid flow, whereupon rotation of the fluid converting element is induced; and
c. converting said rotation into electricity;
d. adjusting a rotation speed of the fluid converting element around the action by at least one of:
disturbing fluid flow;
opening a cavity in said chamber;
modifying the area of at least one of said inlet or outlet ports; and
changing the helix angle of said helically wound tubular conduit.

12. The method according to claim 11, wherein said fluid is at least one of wind and water.

## Patentansprüche

1. Fluidumwandlungselement (100) zum Umwandeln von Fluidströmungsenergie in Rotationsenergie, wobei das Fluidumwandlungselement wenigstens zwei offene röhrenförmige Leitungen (110) umfasst, die um eine Drehachse (160) gewickelt sind, wobei wenigstens einer der röhrenförmigen Leitungen spiralförmig um die Drehachse gewickelt ist und jede der Leitungen eine Kammer (120) umfasst, die eine jeweilige Einlassöffnung (130) und eine jeweilige Auslassöffnung (140) hat,
wobei die Querschnittsfläche der Einlassöffnung wenigstens einer der röhrenförmigen Leitungen größer ist als die Querschnittsfläche der Auslassöffnung der Leitung und
wobei die Drehgeschwindigkeit des Fluidumwandlungselements eingestellt werden kann durch wenigstens eines von dem Folgenden:
das Unterbrechen der Fluidströmung,
das Öffnen eines Hohlraums in der Kammer,
das Modifizieren der Fläche wenigstens einer von den Einlass- oder den Auslassöffnungen und
das Verändern des Schrägungswinkels der spiralförmig gewickelten röhrenförmigen Leitung.

2. Fluidumwandlungselement (100) nach Anspruch 1, wobei die Drehgeschwindigkeit des Fluidumwandlungselements durch das Unterbrechen der Fluidströmung eingestellt werden kann.

3. Fluidumwandlungselement (100) nach Anspruch 1, wobei die Drehgeschwindigkeit des Fluidumwandlungselements durch das Öffnen eines Hohlraums in der Kammer eingestellt werden kann.

4. Fluidumwandlungselement (100) nach Anspruch 1, wobei die Drehgeschwindigkeit des Fluidumwandlungselements durch das Modifizieren der Fläche wenigstens einer von den Einlass- oder den Auslassöffnungen eingestellt werden kann.

5. Fluidumwandlungselement (100) nach Anspruch 1, wobei die Drehgeschwindigkeit des Fluidumwandlungselements durch das Verändern des Schrägungswinkels der spiralförmig gewickelten röhrenförmigen Leitung eingestellt werden kann.

6. Fluidumwandlungselement nach einem der Ansprüche 1 bis 5, wobei sich der Durchmesser wenigstens einer der röhrenförmigen Leitungen entlang von deren Länge ändert.

7. Fluidumwandlungselement nach einem der Ansprüche 1 bis 5, wobei das Fluid wenigstens eines von Wind und Wasser ist.

8. Maschine (601, 701), die das Fluidumwandlungselement (600, 700) nach einem der Ansprüche 1 bis 5 einschließt, wobei die Maschine ferner einen Energiewandler (690, 790) umfasst, der auf die Drehung des Fluidumwandlungselements anspricht.

9. Maschine nach Anspruch 8, wobei der Energiewandler ausgewählt ist aus der Gruppe, die aus Generatoren, Verdichtern, Pumpen, Greifern, Aufzügen, Bohrern, Rührern und Knetern besteht.

10. Fluidumwandlungselement nach einem der Ansprüche 1 bis 5, wobei wenigstens eine der röhrenförmigen Leitungen hergestellt ist aus einem Werkstoff, der ausgewählt ist aus der Gruppe, die aus einem Metall, Fasern, Holz, Polymerwerkstoff, Glas, Gewebe, Legierungen und Kombinationen derselben besteht.

11. Verfahren zum Umwandeln von mit einer Fluidströmung verknüpfter Energie in Elektrizität, das Folgendes umfasst:
a. das Bereitstellen eines Fluidumwandlungselements (100), das wenigstens zwei offene röhrenförmige Leitungen (110) umfasst, die um eine Drehachse (160) gewickelt sind, wobei wenigstens einer der röhrenförmigen Leitungen spiralförmig um die Drehachse gewickelt ist und jede der Leitungen eine jeweilige Einlassöffnung (130) und eine jeweilige Auslassöffnung (140) umfasst, wobei die Querschnittsfläche der Einlassöffnung wenigstens einer der röhrenförmigen Leitungen größer ist als die Querschnittsfläche der Auslassöffnung der Leitung,
b. das Aussetzen des Fluidumwandlungselements einer Fluidströmung, woraufhin eine Drehung des Fluidumwandlungselements induziert wird, und
c. das Umwandeln der Drehung in Elektrizität,
d. das Einstellen einer Drehgeschwindigkeit des Fluidumwandlungselements um das Getriebe durch wenigstens eines von dem Folgenden:
das Unterbrechen der Fluidströmung,
das Öffnen eines Hohlraums in der Kammer,
das Modifizieren der Fläche wenigstens einer von den Einlass- oder den Auslassöffnungen und
das Verändern des Schrägungswinkels der spiralförmig gewickelten röhrenförmigen Leitung.

12. Verfahren nach Anspruch 11, wobei das Fluid wenigstens eines von Wind und Wasser ist.

## Revendications

1. Elément de conversion de fluide (100) pour convertir l'énergie d'un écoulement de fluide en énergie de rotation, l'élément de conversion du fluide comprenant au moins deux conduits tubulaires ouverts (110), enroulés autour d'un axe de rotation (160), dans lequel au moins un desdits conduits tubulaires est enroulé de manière hélicoïdale autour dudit axe de rotation, chacun desdits conduits comprenant une chambre (120) comportant un orifice d'entrée respectif (130) et un orifice de sortie respectif (140) ;
dans lequel la surface de section transversale de l'orifice d'entrée d'au moins un desdits conduits tubulaires est plus grande que la surface de section transversale de l'orifice de sortie dudit conduit ; et
dans lequel la vitesse de rotation dudit élément de conversion du fluide peut être ajustée par au moins une des actions ci-dessous :
perturbation dudit écoulement de fluide ;
ouverture d'une cavité dans ladite chambre ;
modification de la surface d'au moins un desdits orifices d'entrée ou de sortie ; et
changement de l'angle d'hélice dudit conduit tubulaire à enroulement hélicoïdal.

2. Elément de conversion de fluide (100) selon la revendication 1, dans lequel la vitesse de rotation dudit élément de conversion du fluide peut être ajustée en perturbant l'écoulement de fluide.

3. Elément de conversion de fluide (100) selon la revendication 1, dans lequel la vitesse de rotation dudit élément de conversion du fluide peut être ajustée en ouvrant la cavité dans ladite chambre.

4. Elément de conversion de fluide (100) selon la revendication 1, dans lequel la vitesse de rotation dudit élément de conversion du fluide peut être ajustée en modifiant la surface d'au moins un desdits orifices d'entrée ou de sortie.

5. Elément de conversion de fluide (100) selon la revendication 1, dans lequel la vitesse de rotation dudit élément de conversion du fluide peut être ajustée en changeant l'angle d'hélice dudit conduit tubulaire à enroulement hélicoïdal.

6. Elément de conversion de fluide selon l'une quelconque des revendications 1 à 5, dans lequel le diamètre d'au moins un desdits conduits tubulaires varie le long de sa longueur.

7. Elément de conversion de fluide selon l'une quelconque des revendications 1 à 5, dans lequel ledit fluide est constitué par au moins un élément, le vent ou l'eau.

8. Machine (601, 701), englobant l'élément de conversion de fluide (600, 700) selon l'une quelconque des revendications 1 à 5, ladite machine comprenant en outre un transducteur d'énergie (690, 790), sensible à la rotation de l'élément de conversion du fluide.

9. Machine selon la revendication 8, dans lequel ledit transducteur d'énergie est sélectionné dans le groupe constitué de génératrices, de compresseurs, de pompes, de pinces à anneaux, de perceuses, d'agitateurs et de malaxeurs.

10. Elément de conversion de fluide selon l'une quelconque des revendications 1 à 5, dans lequel au moins un desdits conduits tubulaires est composé d'un matériau sélectionné dans le groupe constitué d'un métal, de fibres, de bois, d'un matériau polymère, de verre, de tissu, d'alliages et de combinaisons de ces matériaux.

11. Procédé de conversion de l'énergie associée à un écoulement de fluide en électricité, comprenant les étapes ci-dessous :
a. fourniture d'un élément de conversion de fluide (100), comprenant au moins deux conduits tubulaires ouverts (110) enroulés autour d'un axe de rotation (160), au moins un desdits conduits tubulaires étant enroulé de manière hélicoïdale autour dudit axe de rotation et chacun desdits conduits comprenant un orifice d'entrée respectif (130) et un orifice de sortie respectif (140), dans lequel la surface de section transversale de l'orifice d'entrée d'au moins un desdits conduits tubulaires est plus grande que la surface de section transversale de l'orifice de sortie dudit conduit ;
b. exposition dudit élément de conversion du fluide à un écoulement de fluide, entraînant ainsi la rotation de l'élément de conversion du fluide ; et
c. conversion de ladite rotation en électricité ;
d. ajustement d'une vitesse de rotation de l'élément de conversion de fluide par l'intermédiaire d'au moins une des actions ci-dessous :
perturbation de l'écoulement du fluide ;
ouverture d'une cavité dans ladite chambre ;
modification de la surface d'au moins un desdits orifices d'entrée ou de sortie ; et
changement de l'angle d'hélice dudit conduit à enroulement hélicoïdal.

12. Procédé selon la revendication 11, dans lequel ledit fluide est constitué par au moins un élément, le vent ou l'eau.
